# EUROPÄISCHE PATENTSCHRIFT

(11) **EP 3 253 182 B1**
(45) Veröffentlichungstag und Bekanntmachung des Hinweises auf die Patenterteilung: **20.06.2018**
(21) Anmeldenummer: 17170770.6
(22) Anmeldetag: 12.05.2017
(51) Int. Cl.: H05B 39/08, H05B 37/02, H05B 39/04

(54) **DIMMERSYSTEM**
DIMMER SYSTEM
SYSTÈME GRADATEUR DE LUMIÈRE

(30) Priorität: 30.05.2016 DE 102016209278
(43) Veröffentlichungstag der Anmeldung: 06.12.2017
(73) Patentinhaber: Siemens Schweiz AG, 8047 Zürich (CH)
(72) Erfinder: Hoch, Peter, 93080 Pentling (DE)
(74) Vertreter: Maier, Daniel Oliver

(56) Entgegenhaltungen:
- EP-A2- 0 581 021
- DE-B3- 10 315 554
- DE-B3-102006 013 518
- DE-B3-102006 033 765

## Beschreibung

Die Erfindung betrifft ein Dimmersystem zur Steuerung der Leistungsaufnahme einer anschliessbaren Last, mit einer Master-Steuereinrichtung und mit mindestens zwei Slave-Dimmern. Weiterhin Betrifft die Erfindung ein Verfahren zur Steuerung der Leistungsaufnahme einer anschliessbaren Last in einem Dimmersystem, mit einer Master-Steuereinrichtung und mit mindestens zwei Slave-Dimmern.

Dimmer beziehungsweise Dimmvorrichtungen oder Dimmersysteme zur Helligkeitssteuerung sind allgemein bekannt und sie dienen dazu, die Leistung einer Leuchteinrichtung zu variieren. Eine solche Leistungsvariation kann durch Phasenanschnittsteuerung oder Phasenabschnittsteuerung erfolgen. Bei der Phasenanschnittsteuerung wird der Strom verzögert nach dem Nulldurchgang der Wechselspannung eingeschaltet und fließt bis zum nächsten Stromnulldurchgang. Bei der Phasenabschnittsteuerung hingegen wird der Strom nach dem Nulldurchgang sofort eingeschaltet und vor dem nächsten Nulldurchgang wieder ausgeschaltet.

Weiterhin sind sogenannte Mehrkanaldimmersysteme bekannt, bei denen ein Master-Dimmer mehrere Leistungsstufen (Slave-Dimmer, Kanäle) aufweist, die ausgangsseitig für eine Leistungssteigerung parallelschaltbar sind. Bei diesen leistungsstarken Dimmern werden mehrere physikalische Kanäle (Slaves) parallel geschaltet und es entsteht ein leistungsstarker logischer Kanal. Bei dieser Parallelschaltung ist es sehr wichtig, dass die Ausgänge gleichzeitig schalten. Wenn zwei Kanäle parallel geschaltet wurden und der 2. Kanal zu spät (bei Phasenanschnitt) oder zu früh (bei Phasenabschnitt) schaltet, wird der erste Kanal überlastet. Dies führt zu einer übermäßigen Erwärmung und dann zum Derating oder Abschalten des logischen Kanals, wobei in diesem Fall beide physikalischen Kanäle sind betroffen sind.

Im Allgemeinen weisen die parallelen physikalischen Kanäle jeweils eigene Schaltungen zur Phasensynchronisation auf. Durch Bauteiletoleranzen oder durch Alterung der Bauteile können aber zeitliche Unterschiede bei der Nulldurchgangserkennung entstehen. Diese zeitlichen Unterschiede führen dann zu einem nicht synchronen Schalten der Kanäle (Slaves) und zu den oben beschriebenen Problemen. Neukalibrierungen der Bauteile sind zwar prinzipiell möglich, aber sie stören den Betrieb im Gebäude des Kunden und verursachen Wartungskosten. Auch ein möglicher Geräteaustausch verursacht Kosten und Störungen beim Kunden. DE10315554B3 offenbart ein Dimmersystem bzw. ein Verfahren nach der Präambel des Anspruchs 1 bzw. 10.

Es ist daher die Aufgabe der vorliegenden Erfindung ein wartungsarmes Dimmersystem zur phasensynchronen Schaltung mehrerer paralleler physikalischer Kanäle bzw. Slave-Dimmer bereitzustellen.

Die Aufgabe wird gelöst durch ein Dimmersystem zur Steuerung der Leistungsaufnahme einer anschliessbaren Last, mit einer Master-Steuereinrichtung und mit mindestens zwei parallel geschalteten Slave-Dimmern, um einen gemeinsamen gesteuerten Ausgang für die anschliessbare Last bereitzustellen,
wobei die Master-Steuereinrichtung (MSE) dazu eingerichtet ist, Synchronisationssignale zur Synchronisierung der jeweiligen Ausgänge der Slave-Dimmer über eine geeignete Kommunikationsverbindung an die jeweiligen Slave-Dimmer auszugeben;
wobei jeder Slave-Dimmer eine Slave-Steuereinrichtung aufweist, welche dazu eingerichtet ist, die Synchronisationssignale von der Master-Steuereinrichtung zu empfangen; dadurch gekennzeichnet,
dass die Master-Steuereinrichtung dazu eingerichtet ist, die Synchronisationssignale gleichzeitig an die Slave-Steuereinrichtungen zu senden;
dass jede Slave-Steuereinrichtung dazu eingerichtet ist, die Zeit zwischen dem jeweils empfangenen Synchronisationssignal und dem jeweils erkannten Netzspannungsnulldurchgang zu messen und diese Zeit an die Master-Steuereinrichtung zu melden; und
dass die Master-Steuereinrichtung dazu eingerichtet ist, einen jeweiligen Korrekturwert aus der zeitlichen Differenz der jeweils gemeldeten Zeitdifferenzen für die Slave-Steuereinrichtungen zu ermitteln und dazu eingerichtet ist, die jeweiligen Korrekturwerte über die Kommunikationsverbindung an die jeweiligen Slave-Steuereinrichtungen zur Korrektur der Ansteuerung des Ausgangs durch den jeweiligen Slave-Dimmer auszugeben.

Eine vorteilhafte Ausgestaltung liegt in einem Dimmersystem zur Steuerung der Leistungsaufnahme einer anschliessbaren Last, mit einer Master-Steuereinrichtung und mit mindestens zwei Slave-Dimmern,
- wobei die Master-Steuereinrichtung Synchronisationssignale zur Synchronisierung der jeweiligen Ausgänge der Slave-Dimmer über eine geeignete Kommunikationsverbindung an die jeweiligen Slave-Dimmer ausgibt;
- wobei jeder Slave-Dimmer eine Slave-Steuereinrichtung aufweist, welche die Synchronisationssignale von der Master-Steuereinrichtung empfängt;
- wobei die Slave-Dimmer parallel geschaltet sind, um einen gemeinsamen gesteuerten Ausgang für die anschliessbare Last bereitzustellen;
- wobei die Master-Steuereinrichtung die Synchronisationssignale gleichzeitig an die Slave-Steuereinrichtungen sendet;
- wobei jede Slave-Steuereinrichtung dazu eingerichtet ist, die Zeit zwischen dem jeweils empfangenen Synchronisationssignal und dem jeweils erkannten Netzspannungsnulldurchgang zu messen und diese Zeit an die Master-Steuereinrichtung zu melden; und
- wobei die Master-Steuereinrichtung dazu eingerichtet ist, einen jeweiligen Korrekturwert aus der zeitlichen Differenz der jeweils gemeldeten Zeitdifferenzen für die Slave-Steuereinrichtungen zu ermitteln und dazu eingerichtet ist, die jeweiligen Korrekturwerte über die Kommunikationsverbindung an die jeweiligen Slave-Steuereinrichtungen zur Korrektur der Ansteuerung des Ausgangs durch den jeweiligen Slave-Dimmer auszugeben.

Die Slave-Dimmer können dabei in einem Gerät sein, oder aber auch in mehreren Geräten. Mit Vorteil weisen die Slave-Dimmer ganz einfache Prozessoren zur Erkennung des Phasenanschnitts oder Phasenabschnitts auf. Das erfindungsgemässe Mehrkanaldimmersystem ist zur Einzelsteuerung (Ansteuerung eines einzigen Verbrauchers), aber auch zur Gruppensteuerung (Ansteuerung einer Mehrzahl von Verbrauchern) einsetzbar. Somit lassen sich durch das erfindungsgemässe Mehrkanaldimmersystem ein einziger oder wenige Verbraucher mit hoher Leistung ansteuern, aber auch eine Vielzahl von Verbrauchern mit jeweils kleiner Leistung. Das erfindungsgemässe Mehrkanaldimmersystem ist auch für mehr als zwei parallelgeschalteter Slave-Dimmer einsetzbar. Dadurch ist es möglich, in Abhängigkeit der jeweils vorliegenden Anforderungen an das Beleuchtungssystem und der dazu jeweils erforderlichen Last am Ausgang, ein skalierbares Dimmersystem bereitzustellen.

Eine weitere vorteilhafte Ausgestaltung der Erfindung liegt darin, dass für die Ermittlung der jeweiligen Korrekturwerte die Master-Steuereinrichtung gleichzeitig an alle Slave-Dimmer ein Signal (Syncsignal) sendet zum Messen der Zeit des jeweiligen slave-spezifischen Nulldurchgangs und dem gesendeten Signal, und wobei die Master-Steuereinrichtung basierend auf den jeweils gemessenen slave-spezifischen Zeiten die jeweilige zeitliche Differenz als jeweiligen slave-spezifischen Korrekturwert bereitstellt. Zur Synchronisation der Slave-Dimmer sendet die Master-Steuereinrichtung gleichzeitig an die Slave-Dimmer (z.B. über eine serielle Kommunikationsverbindung zwischen der Master-Steuereinrichtung und den jeweiligen Slave-Dimmer) ein Signal zum Messen der Zeit zwischen Nulldurchgang und diesem gesendeten seriellen Signal. Das Signal im weiteren Syncsignal genannt, besteht aus einem oder mehreren Bytes (Die Anzahl der zu senden Bytes hängt vom verwendeten Protokoll ab). Anschließend fragt die Master-Steuereinrichtung die Slave-Dimmer nach der gemessenen Zeit. Die Master-Steuereinrichtung ermittelt nun die Differenz zwischen den beiden Zeiten und teilt den Slave-Dimmern mit einer längeren Zeit einen jeweiligen Korrekturwert für die Ansteuerung ihres jeweiligen Ausgangs mit. Derjenige Slave-Dimmer, dessen Nulldurchgang "zu Spät" erkannt wird, steuert nun den Ausgang um den Korrekturwert früher an. Mit Vorteil wird das Syncsignal als Synchronisationssignal verwendet.

Eine weitere vorteilhafte Ausgestaltung der Erfindung liegt darin, dass die gemessenen slave-spezifischen Zeiten der Master-Steuereinrichtung interrupt gesteuert mitgeteilt werden. Die Master-Steuereinrichtung muss somit nicht von selbst aktiv werden, um die slave-spezifischen Zeiten zu erhalten.

Eine weitere vorteilhafte Ausgestaltung der Erfindung liegt darin, dass die Master-Steuereinrichtung die gemessenen slave-spezifischen Zeiten von den jeweiligen Slave-Dimmern durch ein Polling abfrägt. Beim Polling kontaktiert die Master-Steuereinrichtung die Slave-Dimmer in gewissen definierten Zeitabständen und frägt die jeweiligen slave-spezifischen Zeiten ab. Dieses Vorgehen ist insbesondere von Vorteil, wenn viele "Treffer", d.h. Abweichungen zu erwarten sind, insbesondere bei Slave-Dimmern, die schon lange in Betrieb sind und somit eine Alterung der Bauteile vorliegt.

Eine weitere vorteilhafte Ausgestaltung der Erfindung liegt darin, dass die jeweiligen Synchronisationssignale von der Master-Steuereinrichtung an die Slave-Dimmer über eine jeweils separate Leitung gesendet werden. Das Synchronisationssignal (positive oder negative Flanke) muss nicht über die serielle Kommunikationsschnittstelle zwischen der Master-Steuereinrichtung und den Slave-Dimmern an diese gesendet werden, sondern es kann auch über jeweils separate Leitungen von der Master-Steuereinrichtung an die Slave-Dimmer gesendet werden.

Eine weitere vorteilhafte Ausgestaltung der Erfindung liegt darin, dass mehrere Messungen zur Ermittlung der jeweiligen Korrekturwerte durchgeführt werden und wobei die jeweiligen Messwerte zur Ermittlung des jeweiligen Korrekturwertes gemittelt werden. Mit Vorteil wird dazu der arithmetische Mittelwert, der Median oder ein anderes geeignetes Verfahren verwendet. Somit können Ausreisser in den Messergebnissen erkannt und eliminiert werden. Dadurch ist insbesondere sichergestellt, dass eine sichere Synchronisation erfolgt.

Eine weitere vorteilhafte Ausgestaltung der Erfindung liegt darin, dass die Slave-Steuereinrichtungen die Signalisierung jeweils zeitlich zueinander versetzt an die Master-Steuereinrichtung senden. Dadurch wird eine Überlastung der Kommunikationsleitungen vermieden.

Eine weitere vorteilhafte Ausgestaltung der Erfindung liegt darin, dass das Dimmersystem zusätzlich ein Kommunikationsmodul aufweist, das eingerichtet ist, Signale von einem Installationsbus zu empfangen und zur Master-Steuereinrichtung zu übertragen. Das erfindungsgemässe Dimmersystem kann modular aufgebaut sein und ist optional um ein Kommunikationsmodul ergänzbar, das mit Vorteil Anschlussklemmen zur Ankopplung an einen Installationsbus (z.B. KNX-Bussystem) aufweist. Das Kommunikationsmodul kann Signale selbst mittels einer Tasteneingabe erhalten, oder über den Installationsbus empfangen und über eine geeignete Verbindungsleitung zur Master-Steuereinrichtung weiterleiten. Mit Vorteil erfolgt eine Auswertung empfangener Signale bereits im Kommunikationsmodul.

Eine weitere vorteilhafte Ausgestaltung der Erfindung liegt darin, dass der Master das Synchronisationssignal nicht gleichzeitig an alle Slaves sendet, sondern an mindestens zwei Slavegruppen, wobei diese zwei Slavegruppen mindestens einen gemeinsamen Slave umfassen. Dadurch wird die Kommunikation auf dem Übertragungsmedium reduziert.

Die Aufgabe wird weiterhin gelöst durch ein Verfahren zur Steuerung der Leistungsaufnahme einer anschliessbaren Last, mit einer Master-Steuereinrichtung und mit mindestens zwei Slave-Dimmern,
- wobei die Master-Steuereinrichtung Synchronisationssignale zur Synchronisierung der jeweiligen Ausgänge der Slave-Dimmer über eine geeignete Kommunikationsverbindung an die jeweiligen Slave-Dimmer ausgibt;
- wobei jeder Slave-Dimmer eine Slave-Steuereinrichtung aufweist, welche die Synchronisationssignale von der Master-Steuereinrichtung empfängt;
- wobei die Slave-Dimmer parallel geschaltet sind, um einen gemeinsamen gesteuerten Ausgang für die anschliessbare Last bereitzustellen;
- wobei die Master-Steuereinrichtung das Synchronisationssignal gleichzeitig an die Slave-Steuereinrichtungen sendet;
- wobei jede Slave-Steuereinrichtung dazu eingerichtet ist, die Zeit zwischen dem empfangenen Synchronisationssignal und dem jeweils erkannten Netzspannungsnulldurchgang zu messen und diese Zeit an die Master-Steuereinrichtung zu melden;
- wobei die Master-Steuereinrichtung dazu eingerichtet ist, einen jeweiligen Korrekturwert aus der zeitlichen Differenz der jeweils gemeldeten Zeitdifferenzen für die Slave-Steuereinrichtungen zu ermitteln und dazu eingerichtet ist, die jeweiligen Korrekturwerte über die Kommunikationsverbindung an die jeweiligen Slave-Steuereinrichtungen zur Korrektur der Ansteuerung des Ausgangs durch den jeweiligen Slave-Dimmer auszugeben. Das erfindungsgemässe Verfahren ermöglicht eine einfache Art der Synchronisation von parallelgeschalteten Slave-Dimmern, ohne zusätzliche Hardware-Komponenten. Mit Triacs lässt sich diese Synchronisation nur für Phasenanschnitt-Steuereinrichtungen realisieren.

Die Erfindung sowie vorteilhafte Ausführungen der vorliegenden Erfindung werden am Beispiel der nachfolgenden Figuren erläutert. Dabei zeigen:
- FIG 1: eine beispielhafte Anordnung für ein Dimmersystem mit mehreren beispielhaften parallelgeschalteten Slave-Dimmern, und
- FIG 2: ein beispielhaftes Ablaufdiagramm zur Durchführung des erfindungsgemässen Verfahrens.

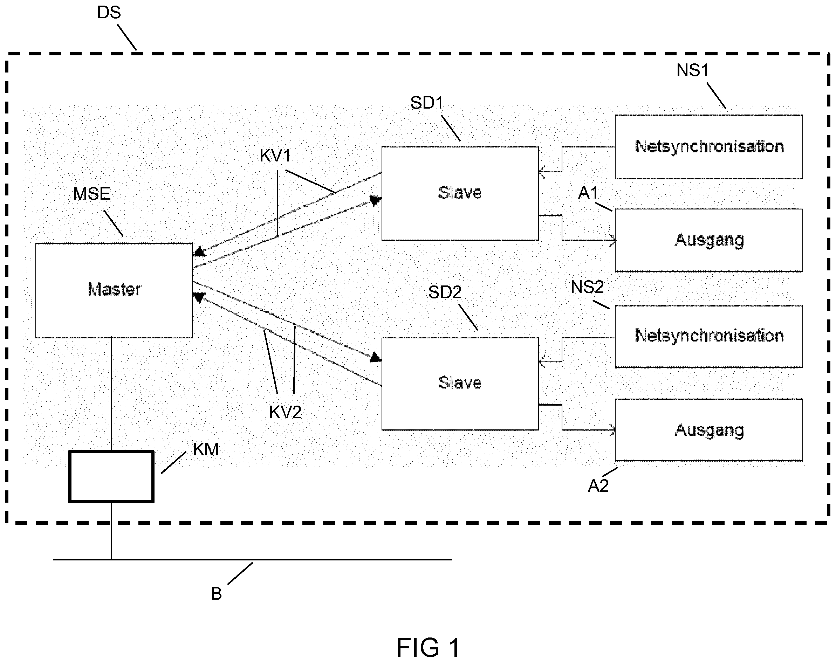

Figur 1 zeigt eine beispielhafte Anordnung für ein Dimmersystem DS mit mehreren beispielhaften parallelgeschalteten Slave-Dimmern SD1, SD2. Das beispielhafte Dimmersystem DS in der Darstellung gemäss Figur 1 ist geeignet zur Steuerung der Leistungsaufnahme einer anschliessbaren Last. Das beispielhafte Dimmersystem DS umfasst eine Master-Steuereinrichtung MSE und und mindestens zwei Slave-Dimmer SD1, SD2, wobei die Master-Steuereinrichtung MSE Synchronisationssignale zur Synchronisierung der jeweiligen Ausgänge der Slave-Dimmer SD1, SD2 über eine geeignete Kommunikationsverbindung KV1, KV2 an die jeweiligen Slave-Dimmer (SD1, SD2) ausgibt. Jeder Slave-Dimmer SD1, SD2 weist eine Slave-Steuereinrichtung auf, welche die Synchronisationssignale von der Master-Steuereinrichtung MSE empfängt. Mindestens zwei der Slave-Dimmer SD1, SD2 sind parallel geschaltet, um einen gemeinsamen gesteuerten Ausgang für die anschliessbare Last bereitzustellen. Die Master-Steuereinrichtung MSE ist dazu eingerichtet die Synchronisationssignale gleichzeitig an die Slave-Steuereinrichtungen zu senden. Jede Slave-Steuereinrichtung ist dazu eingerichtet, die Zeit zwischen dem jeweils empfangenen Synchronisationssignal und dem jeweils erkannten Netzspannungsnulldurchgang zu messen und diese Zeit an die Master-Steuereinrichtung MSE zu melden. Weiterhin ist die Master-Steuereinrichtung MSE dazu eingerichtet, einen jeweiligen Korrekturwert aus der zeitlichen Differenz der jeweils gemeldeten Zeitdifferenzen für die jeweilige Slave-Steuereinrichtungen zu ermitteln und dazu eingerichtet, die jeweiligen Korrekturwerte über die Kommunikationsverbindung KV1, KV2 an die jeweiligen Slave-Steuereinrichtungen zur Korrektur der Ansteuerung des jeweiligen Ausgangs A1, A2 durch den jeweiligen Slave-Dimmer SD1, SD2 auszugeben. Mit Vorteil werden die jeweiligen Korrekturwerte über jeweils dedizierte Ansteuersignale an die jeweiligen Slave-Dimmer SD1, SD2 von der Master-Steuereinrichtung MSE gesendet.

Die Slave-Dimmer SD1, SD2 können dabei bautechnisch in einem Gerät sein, oder aber auch in mehreren Geräten. Mit Vorteil weisen die Slave-Dimmer SD1, SD2 Slave-Steuereinrichtungen (z.B. einfache Prozessoren) zur Erkennung des Phasenanschnitts oder Phasenabschnitts auf. Das erfindungsgemässe Mehrkanaldimmersystem DS ist zur Einzelsteuerung (Ansteuerung eines einzigen Verbrauchers), aber auch zur Gruppensteuerung (Ansteuerung einer Mehrzahl von Verbrauchern) einsetzbar. Somit lassen sich durch das erfindungsgemässe Mehrkanaldimmersystem DS ein einziger (z.B. eine Lampe bzw. ein Leuchtmittel) oder wenige Verbraucher mit hoher Leistung ansteuern, aber auch eine Vielzahl von Verbrauchern (z.B. ein Beleuchtungssystem für einen Flur oder eine Halle) mit jeweils kleiner Leistung. Das erfindungsgemässe Mehrkanaldimmersystem DS ist prinzipiell auch für mehr als zwei parallelgeschalteter Slave-Dimmer SD1, SD2 einsetzbar.

Für die Ermittlung der jeweiligen Korrekturwerte sendet die Master-Steuereinrichtung MSE gleichzeitig an alle Slave-Dimmer SD1, SD2 ein Signal (mit Vorteil ein Synchronisationssignal) zum Messen der Zeit des jeweiligen slave-spezifischen Nulldurchgangs und dem gesendeten Signal, und wobei die Master-Steuereinrichtung MSE basierend auf den jeweils gemessenen slave-spezifischen Zeiten die jeweilige zeitliche Differenz als jeweiligen slave-spezifischen Korrekturwert bereitstellt. In der Darstellung gemäss Figur 1 ist dargestellt, dass die jeweiligen slave-spezifischen Nulldurchgänge durch eine Netzsynchronisation NS1, NS2 ermittelt werden. Die Slave-Dimmer SD1, SD2 umfassen jeweils ein Leistungsteil mit jeweils wenigstens einem Leistungstransistor (z.B. Power-MOS-Transistor). Die Leistungsausgänge A1, A2 aller Slave-Dimmer SD1, SD2 sind durch eine elektrische Parallelschaltung miteinander verbunden, zur Bildung eines gemeinsam ansteuerbaren Ausgangs A1, A2, an den eine Last anschliessbar ist.

In einer weiteren vorteilhaften Ausgestaltung des Dimmersystems DS ist die Master-Steuereinrichtung MSE eine Komponente (z.B. ein Mikroprozessor) eines Master-Dimmers. Master-Dimmer und Slave-Dimmer SD1, SD2 umfassen jeweils ein Leistungsteil mit jeweils wenigstens einem Leistungstransistor. Mit Vorteil sind in der Ausgestaltung mit Master-Dimmer die Leistungsausgänge A1, A2 aller Dimmer durch eine elektrische Parallelschaltung miteinander verbunden, zur Bildung eines gemeinsam ansteuerbaren Ausgangs, an den eine Last anschliessbar ist. Mit Vorteil weist das Dimmersystem DS eine Ausgabevorrichtung (z.B. Display) zur Darstellung von Betriebszuständen oder Störungen auf. Mit Vorteil weist die Master-Steuereinrichtung MSE einen Mikroprozessor und einen dazugehörigen Speicher auf und ermöglicht zusätzliche Funktionen wie z.B. eine Memory-Funktion (Einstellen des Dimmers auf den letzten verwendeten Wert vor dem Ausschalten.

Mit Vorteil weist das Dimmersystem DS zusätzlich ein Kommunikationsmodul KM auf, das eingerichtet ist, Signale von einem Installationsbus B zu empfangen und zur Master-Steuereinrichtung MSE zu übertragen. Das erfindungsgemässe Dimmersystem DS ist mit Vorteil modular aufgebaut und um ein Kommunikationsmodul KM ergänzbar, das mit Vorteil Anschlussklemmen zur Ankopplung an einen Installationsbus B (z.B. KNX-Bussystem) aufweist. Das Kommunikationsmodul KM kann Signale selbst mittels einer Tasteneingabe erhalten, oder über den Installationsbus B empfangen und über eine geeignete Verbindungsleitung (z.B. elektrische Leitung, bzw. Datenleitung) zur Master-Steuereinrichtung MSE weiterleiten. Mit Vorteil erfolgt eine Auswertung empfangener Signale bereits im Kommunikationsmodul KM. Durch die Möglichkeit der Tasteneingabe am Kommunikationsmodul KM kann dieses auch Steuerfunktionen übernehmen. Insbesondere ist das Kommunikationsmodul KM dazu eingerichtet Signale des Bussystems B zu erkennen, zu empfangen und für die Master-Steuereinrichtung MSE aufzubereiten und an diese weiterzuleiten. Dies ist insbesondere von Vorteil bei einem Bussystem mit Datenübertragung über das Stromnetz (z.B. KNX-Powerline).

Ein leistungsstarker Dimmer DS, der mehrere physikalische Kanäle besitzt, besteht aus einer Master-Steuereinrichtung MSE, z.B. einem Microcomputer der die Applikation (Master)inkl. Bus- bzw. KNX-Kommunikation beinhaltet. Jeder Kanal/Ausgang A1, A2 wird durch einen Slave-Dimmer SD1, SD2 mit Microcomputer gesteuert, der auch die Nulldurchgangserkennung (d.h. die Netzsynchronisation) NS1, NS2 ermittelt. Als Kommunikationsverbindung KV1, KV2 zwischen Master-Steuereinrichtung MSE und Slave-Dimmer SD1, SD2 ist z.B. je eine serielle galvanisch getrennte Schnittstelle vorhanden.

Die Nulldurchgangserkennung beim einem der Slave-Dimmer SD1, SD2 erfolgt z.B. über eine Beschaltung eines Interrupteingangs. Es wird also bei jedem (oder jedem 2.) Nulldurchgang ein Interrupt im Slave-Dimmer SD1, SD2 ausgelöst. Entsprechend der Beschaltung ist auch eine um 90° spätere Synchronisation möglich. Der Slave-Dimmer SD1, SD2 ermittelt dann die Ansteuerzeit (Zeit zwischen Nulldurchgang und Ansteuerung des Ausgangs A1, A2) und steuert dann den Ausgang A1, A2 entsprechend an.

Zur Synchronisation der Slave-Dimmer SD1, SD2 sendet die Master-Steuereinrichtung MSE gleichzeitig an die Slave-Dimmer SD1, SD2 über die z.B. serielle Kommunikation KV1, KV2 ein Signal zum Messen der Zeit zwischen Nulldurchgang und diesem gesendeten seriellen Signal. Das Signal im weiteren Syncsignal genannt, besteht aus einem oder mehreren Bytes (Die Anzahl der zu senden Bytes hängt vom verwendeten Protokoll ab). Anschließend fragt die Master-Steuereinrichtung MSE die Slave-Dimmer SD1, SD2 nach der gemessenen Zeit. Die Master-Steuereinrichtung MSE ermittelt nun die Differenz zwischen den beiden Zeiten (bei zwei Slave-Dimmern) und teilt dem Slave-Dimmer SD1, SD2 mit der längeren Zeit einen Korrekturwert für die Ansteuerung des Ausgangs A1, A2 mit. Der Slave-Dimmer SD1, SD2, dessen Nulldurchgang "zu Spät" erkannt wird, steuert nun den Ausgang A1, A2 um den Korrekturwert früher an.

Es ist auch möglich das Syncsignal (pos. oder neg. Flanke), d.h. das jeweilige Synchronisationssignal an die Slave-Dimmer SD1, SD2 über eine separate, insbesondere jeweils separate, Leitung zu senden.

Diese Erkennung kann während der gesamten Lebensdauer des Slave-Dimmers SD1, SD2 durchgeführt werden und ist unabhängig davon ob der Ausgang A1, A2 angesteuert wird oder abgeschaltet ist.

Da der Master-Dimmer bzw. die Master-Steuereinrichtung MSE im Allgemeinen keine Nulldurchgangserkennung besitzt, muss er das Syncsignal zur Messaufforderung an die Slave-Dimmer SD1, SD2 asynchron (zum Netz) senden. Es kann zu Messfehlern kommen wenn zwei Interrupts (nahezu gleichzeitig eintreffen) Nulldurchgangserkennungs- und serieller Interrupt bzw. Timer- und serieller Interrupt. (Der Timer ist für die Zeit zwischen Nulldurchgang und Ansteuern des Ausgangs A1, A2 erforderlich) Dieser Umstand muss bei der Berechnung vom Master bzw. von der Master-Steuereinrichtung MSE berücksichtigt werden. Es müssen also kleine Werte (serieller Interrupt und Nulldurchgangserkennungsinterrupt zu nahe zusammen) und Werte in der zeitlichen Nähe der Ansteuerung des Ausgangs verworfen werden. Vorteilhaft ist es außerdem mehrere Messungen durchzuführen und die gemessenen Werte zu mitteln bzw. Ausreißer zu verwerfen.

Es ist auch möglich dem letzten Slave (d.h. dem langsamsten bzw. dem mit der grössten verzögerten Nulldurchgangserkennung) einen Korrekturwert von 0 zuzuweisen. Es ist aber auch möglich einem anderen Slave den Korrekturwert 0 zuzuweisen und den anderen Slaven entsprechend angepasste Korrekturwerte.

Die Master-Steuereinrichtung MSE ist dazu eingerichtet, zu erkennen, ob die von den jeweiligen Slave-Steuereinrichtungen gemeldeten Messwerte von verschiedenen Nulldurchgängen stammen oder vom selben. Durch Plausibilitätsprüfungen erkennt somit die Master-Steuereinrichtung MSE, ob sich die von den Slaves gemessenen Zeiten auf denselben Nulldurchgang beziehen.

Das beschriebene Verfahren ist auch für Dimmersysteme mit mehr als 2 parallelgeschalteten Slave-Dimmer einsetzbar.

Es ist prinzipiell möglich die Qualität der Korrektur über die Messung der Temperatur der einzelnen MOSFETs in den Slaves zu beurteilen. Mit Vorteil umfassen die Slave-Dimmer SD1, SD2 Temperatursensoren zur Bestimmung ihrer jeweiligen Temperatur bzw. zur Bestimmung der Temperatur ihrer Schaltelemente (z.B. Transistoren). Mit Vorteil umfasst das Dimmersystem DS eine geeignete Infrastruktur (z.B. geeignete Kommunikationsmittel), um der Master-Steuereinrichtung MSE die jeweilige Temperatur in den Slave-Dimmern SD1, SD2 mitzuteilen. Mit Vorteil berücksichtigt die Master-Steuereinrichtung MSE bei der Bestimmung der jeweiligen Korrekturwerte auch die jeweilige Temperatur in den Slave-Dimmern SD1, SD2. Eine höhere Temperatur in einem Slave lässt auf einen früheren Ansteuerzeitpunkt schließen. Das heißt der Nulldurchgang wurde beim anderen Slave später erkannt bzw. die Korrektur ist noch nicht optimal.

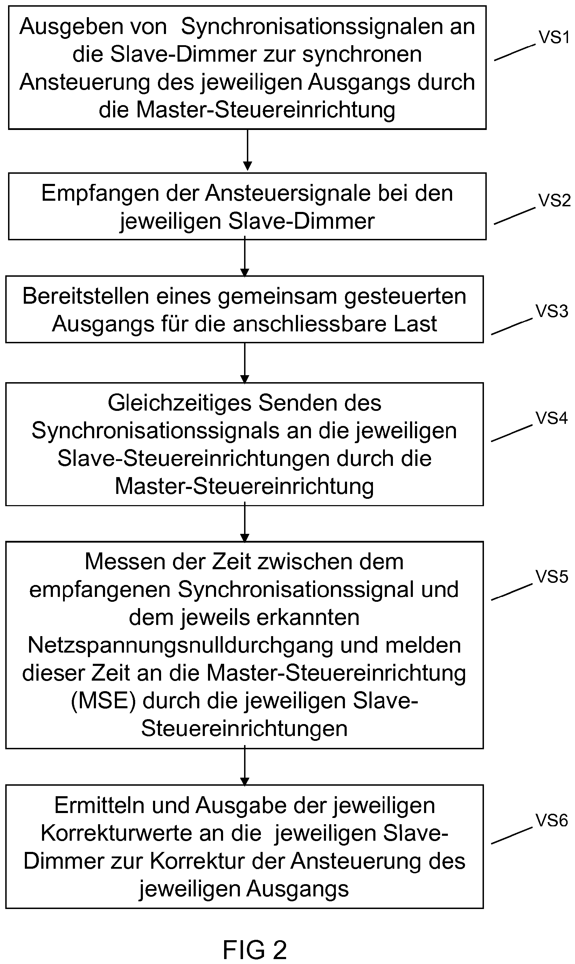

Figur 2 zeigt ein beispielhaftes Ablaufdiagramm mit Verfahrensschritten VS1 - VS6 zur Durchführung des erfindungsgemässen Verfahrens zur Steuerung der Leistungsaufnahme einer anschliessbaren Last in einem Dimmersystem, mit einer Master-Steuereinrichtung und mit mindestens zwei Slave-Dimmern,
(VS1) wobei die Master-Steuereinrichtung Synchronisationssignale zur Synchronisierung der jeweiligen Ausgänge der Slave-Dimmer über eine geeignete Kommunikationsverbindung an die jeweiligen Slave-Dimmer ausgibt;
(VS2) wobei jeder Slave-Dimmer eine Slave-Steuereinrichtung aufweist, welche die Synchronisationssignale von der Master-Steuereinrichtung empfängt;
(VS3) wobei die Slave-Dimmer parallel geschaltet sind, um einen gemeinsamen gesteuerten Ausgang für die anschliessbare Last bereitzustellen;
(VS4) wobei die Master-Steuereinrichtung das Synchronisationssignal gleichzeitig an die Slave-Steuereinrichtungen sendet;
(VS5) wobei jede Slave-Steuereinrichtung dazu eingerichtet ist, die Zeit zwischen dem empfangenen Synchronisationssignal und dem jeweils erkannten Netzspannungsnulldurchgang zu messen und diese Zeit an die Master-Steuereinrichtung zu melden; und
(VS6) wobei die Master-Steuereinrichtung dazu eingerichtet ist, einen jeweiligen Korrekturwert aus der zeitlichen Differenz der jeweils gemeldeten Zeitdifferenzen für die Slave-Steuereinrichtungen zu ermitteln und dazu eingerichtet ist, die jeweiligen Korrekturwerte über die Kommunikationsverbindung an die jeweiligen Slave-Steuereinrichtungen zur Korrektur der Ansteuerung des Ausgangs durch den jeweiligen Slave-Dimmer auszugeben.

Die Master-Steuereinrichtung nimmt eine der von den Slave-Steuereinrichtungen gemeldeten Zeiten als Normzeit. Basierend auf den jeweiligen Zeitdifferenzen zu dieser Normzeit werden von der Master-Steuereinrichtung die jeweiligen Korrekturwerte für die weiteren Slave-Steuereinrichtungen bestimmt und an diese zur Ansteuerung des jeweiligen Ausgangs eines Slave-Dimmers übermittelt. Der jeweilige Slave-Dimmer dann seinen Ausgang um die jeweilige Zeitdifferenz versetzt, d.h. entsprechend später.

Als Normzeit kann z.B. die gemeldete kürzeste bzw. niedrigste Zeit genommen werden. Die Slave-Steuereinrichtung mit der Normzeit benötigt im Prinzip keinen Korrekturwert, da sein Netzspannungsnulldurchgang im Takt läuft. Der Slave-Steuereinrichtung mit der Normzeit kann aber als Korrekturwert Null zugewiesen werden, da deren zeitliche Differenz Null beträgt.

Das erfindungsgemässe Verfahren besteht aus der von einem Master-Dimmer bzw. einer Master-Steuereinrichtung getriebenen Ermittlung der zeitlichen Differenz der Netzsynchronisation von 2 oder mehreren Slave-Dimmern. Es ist keine aufwendige Bestimmung der Unterschiede in der Netznulldurchgangserkennung in der Bandendeprüfung mehr erforderlich. Da für diese Kalibrierung auch Prüfzeit bei der Bandendeprüfung benötigt wird, werden die Prüfkosten mit diesem Verfahren gesenkt. Eine Temperatur- oder altersbedingte Differenz in der Nulldurchgangserkennung wird automatisch ausgeglichen. Es sind keine Wartungsarbeiten zur Neukalibrierung mehr erforderlich. Das Verfahren ist insbesondere in einer busorientierten programmierbaren Elektroinstallation (z.B. KNX-Bussystem) einsetzbar.

Dimmersystem zur Steuerung der Leistungsaufnahme einer anschliessbaren Last und Verfahren zur Steuerung der Leistungsaufnahme einer anschliessbaren Last in einem Dimmersystem, mit einer Master-Steuereinrichtung und mit mindestens zwei Slave-Dimmern, wobei die Master-Steuereinrichtung (MSE) Synchronisationssignale zur Synchronisierung der jeweiligen Ausgänge der Slave-Dimmer über eine geeignete Kommunikationsverbindung an die jeweiligen Slave-Dimmer ausgibt; wobei jeder Slave-Dimmer eine Slave-Steuereinrichtung aufweist, welche die Synchronisationssignale von der Master-Steuereinrichtung empfängt; wobei die Slave-Dimmer parallel geschaltet sind, um einen gemeinsamen gesteuerten Ausgang für die anschliessbare Last bereitzustellen; wobei die Master-Steuereinrichtung das Synchronisationssignal gleichzeitig an die Slave-Steuereinrichtungen sendet; wobei jede Slave-Steuereinrichtung dazu eingerichtet ist, die Zeit zwischen dem empfangenen Synchronisationssignal und dem jeweils erkannten Netzspannungsnulldurchgang zu messen und diese Zeit an die Master-Steuereinrichtung zu melden; wobei die Master-Steuereinrichtung dazu eingerichtet ist, einen jeweiligen Korrekturwert aus der zeitlichen Differenz der jeweils gemeldeten Zeitdifferenzen für die Slave-Steuereinrichtungen zu ermitteln und dazu eingerichtet ist, die jeweiligen Korrekturwerte über die Kommunikationsverbindung an die jeweiligen Slave-Steuereinrichtungen zur Korrektur der Ansteuerung des Ausgangs durch den jeweiligen Slave-Dimmer auszugeben.

### Bezugszeichen

- DS: Dimmersystem
- MSE: Master-Steuereinrichtung
- KM: Kommunikationsmodul
- B: Installationsbus
- KV1, KV2: Kommunikationsverbindung
- SD1, SD2: Slave-Dimmer
- NS1, NS2: Netzsynchronisation
- A1, A2: Ausgang
- VS1 - VS6: Verfahrensschritt

## Patentansprüche

1. Dimmersystem (DS) zur Steuerung der Leistungsaufnahme einer anschliessbaren Last, mit einer Master-Steuereinrichtung (MSE) und mit mindestens zwei parallel geschalteten Slave-Dimmern (SD1, SD2), um einen gemeinsamen gesteuerten Ausgang für die anschliessbare Last bereitzustellen,
wobei die Master-Steuereinrichtung (MSE) dazu eingerichtet ist, Synchronisationssignale zur Synchronisierung der jeweiligen Ausgänge der Slave-Dimmer (SD1, SD2) über eine geeignete Kommunikationsverbindung (KV1, KV2) an die jeweiligen Slave-Dimmer (SD1, SD2) auszugeben;
wobei jeder Slave-Dimmer eine Slave-Steuereinrichtung aufweist, welche dazu eingerichtet ist, die Synchronisationssignale von der Master-Steuereinrichtung (MSE) zu empfangen;
wobei die Master-Steuereinrichtung (MSE) dazu eingerichtet ist, die Synchronisationssignale gleichzeitig an die Slave-Steuereinrichtungen zu senden;
**dadurch gekennzeichnet, dass** jede Slave-Steuereinrichtung dazu eingerichtet ist, die Zeit zwischen dem jeweils empfangenen Synchronisationssignal und dem jeweils erkannten Netzspannungsnulldurchgang zu messen und diese Zeit an die Master-Steuereinrichtung (MSE) zu melden; und
dass die Master-Steuereinrichtung (MSE) dazu eingerichtet ist, einen jeweiligen Korrekturwert aus der zeitlichen Differenz der jeweils gemeldeten Zeitdifferenzen für die Slave-Steuereinrichtungen zu ermitteln und dazu eingerichtet ist, die jeweiligen Korrekturwerte über die Kommunikationsverbindung (KV1, KV2) an die jeweiligen Slave-Steuereinrichtungen zur Korrektur der Ansteuerung des Ausgangs (A1, A2) durch den jeweiligen Slave-Dimmer (SD1, SD2) auszugeben.

2. Dimmersystem (DS) nach Anspruch 1, wobei für die Ermittlung der jeweiligen Korrekturwerte die Master-Steuereinrichtung (MSE) gleichzeitig an alle Slave-Dimmer (SD1, SD2) ein Signal sendet zum Messen der Zeit des jeweiligen slave-spezifischen Nulldurchgangs und dem gesendeten Signal, und wobei die Master-Steuereinrichtung (MSE) basierend auf den jeweils gemessenen slave-spezifischen Zeiten die jeweilige zeitliche Differenz als jeweiligen slave-spezifischen Korrekturwert bereitstellt.

3. Dimmersystem (DS) nach einem der vorstehenden Ansprüche, wobei die gemessenen slave-spezifischen Zeiten der Master-Steuereinrichtung (MSE) interrupt gesteuert mitgeteilt werden.

4. Dimmersystem (DS) nach einem der vorstehenden Ansprüche, wobei die Master-Steuereinrichtung (MSE) die gemessenen slave-spezifischen Zeiten von den jeweiligen Slave-Dimmern (SD1, SD2) durch ein Polling abfrägt.

5. Dimmersystem (DS) nach einem der vorstehenden Ansprüche, wobei die jeweiligen Synchronisationssignale von der Master-Steuereinrichtung (MSE) an die Slave-Dimmer (SD1, SD2) über eine jeweils separate Leitung gesendet werden.

6. Dimmersystem (DS) nach einem der vorstehenden Ansprüche, wobei mehrere Messungen zur Ermittlung der jeweiligen Korrekturwerte durchgeführt werden und wobei die jeweiligen Messwerte zur Ermittlung des jeweiligen Korrekturwertes gemittelt werden.

7. Dimmersystem (DS) nach einem der vorstehenden Ansprüche, wobei die Slave-Steuereinrichtungen die Signalisierung jeweils zeitlich zueinander versetzt an die Master-Steuereinrichtung (MSE) senden.

8. Dimmersystem (DS) nach einem der vorstehenden Ansprüche, wobei das Dimmersystem (DS) zusätzlich ein Kommunikationsmodul (KM) aufweist, das eingerichtet ist, Signale von einem Installationsbus (B) zu empfangen und zur Master-Steuereinrichtung (MSE) zu übertragen.

9. Dimmersystem (DS) nach einem der vorstehenden Ansprüche, wobei der Master das Synchronisationssignal nicht gleichzeitig an alle Slaves sendet, sondern an mindestens zwei Slavegruppen, wobei diese zwei Slavegruppen mindestens einen gemeinsamen Slave umfassen.

10. Verfahren zur Steuerung der Leistungsaufnahme einer anschliessbaren Last, mit einer Master-Steuereinrichtung (MSE) und mit mindestens zwei Slave-Dimmern (SD1, SD2),
(VS1) wobei die Master-Steuereinrichtung (MSE) Synchronisationssignale zur Synchronisierung der jeweiligen Ausgänge der Slave-Dimmer (SD1, SD2) über eine geeignete Kommunikationsverbindung (KV1, KV2) an die jeweiligen Slave-Dimmer (SD1, SD2) ausgibt;
(VS2) wobei jeder Slave-Dimmer eine Slave-Steuereinrichtung aufweist, welche die Synchronisationssignale von der Master-Steuereinrichtung (MSE) empfängt;
(VS3) wobei die Slave-Dimmer (SD1, SD2) parallel geschaltet sind, um einen gemeinsamen gesteuerten Ausgang für die anschliessbare Last bereitzustellen;
(VS4) wobei die Master-Steuereinrichtung (MSE) das Synchronisationssignal gleichzeitig an die Slave-Steuereinrichtungen sendet;
**dadurch gekennzeichnet**,
(VS5) dass jede Slave-Steuereinrichtung dazu eingerichtet ist, die Zeit zwischen dem empfangenen Synchronisationssignal und dem jeweils erkannten Netzspannungsnulldurchgang zu messen und diese Zeit an die Master-Steuereinrichtung (MSE) zu melden; (VS6) und dass die Master-Steuereinrichtung (MSE) dazu eingerichtet ist, einen jeweiligen Korrekturwert aus der zeitlichen Differenz der jeweils gemeldeten Zeitdifferenzen für die Slave-Steuereinrichtungen zu ermitteln und dazu eingerichtet ist, die jeweiligen Korrekturwerte über die Kommunikationsverbindung (KV1, KV2) an die jeweiligen Slave-Steuereinrichtungen zur Korrektur der Ansteuerung des Ausgangs (A1, A2) durch den jeweiligen Slave-Dimmer (SD1, SD2) auszugeben.

## Claims

1. Dimmer system (DS) for controlling the power consumption of a connectable load, having a master control device (MSE) and at least two slave dimmers (SD1, SD2), connected in parallel, in order to provide a shared controlled output for the connectable load,
wherein the master control device (MSE) is designed to output synchronisation signals for synchronising the respective outputs of the slave dimmers (SD1, SD2) via a suitable communication link (KV1, KV2) to the respective slave dimmers (SD1, SD2);
wherein each slave dimmer has a slave control device, which is designed to receive the synchronisation signals from the master control device (MSE);
wherein
the master control device (MSE) is designed to simultaneously transmit the synchronisation signals to the slave control devices;
**characterised in that**
each slave control device is designed to measure the time between the respectively received synchronisation signal and the respectively identified mains voltage zero crossing and to notify the master control device (MSE) of this time; and
the master control device (MSE) is designed to determine a respective correction value from the temporal difference of the respectively notified time differences for the slave control devices and is designed to output the respective correction values via the communication link (KV1, KV2) to the respective slave control devices for correcting the activation of the output (A1, A2) by the respective slave dimmer (SD1, SD2).

2. Dimmer system (DS) according to claim 1, wherein for determining the respective correction values the master control device (MSE) simultaneously transmits a signal to all slave dimmers (SD1, SD2) for measuring the time of the respective slave-specific zero crossing and the transmitted signal, and wherein on the basis of the respectively measured slave-specific times the master control device (MSE) provides the respective temporal difference as a respective slave-specific correction value.

3. Dimmer system (DS) according to one of the preceding claims, wherein the measured slave-specific times of the master control device (MSE) are notified in an interrupt-controlled manner.

4. Dimmer system (DS) according to one of the preceding claims, wherein the master control device (MSE) queries the measured slave-specific times from the respective slave dimmers (SD1, SD2) by means of polling.

5. Dimmer system (DS) according to one of the preceding claims, wherein the respective synchronisation signals are transmitted from the master control device (MSE) to the slave dimmers (SD1, SD2) via a respective separate line.

6. Dimmer system (DS) according to one of the preceding claims, wherein a number of measurements for determining the respective correction values are carried out and wherein the respective measured values are averaged in order to determine the respective correction value.

7. Dimmer system (DS) according to one of the preceding claims, wherein the slave control devices transmit the signalling respectively offset temporally with respect of one another to the master control device (MSE).

8. Dimmer system (DS) according to one of the preceding claims, wherein the dimmer system (DS) additionally has a communication module (KM), which is designed to receive signals from an installation bus (B) and to transmit them to the master control device (MSE).

9. Dimmer system (DS) according to one of the preceding claims, wherein the master does not transmit the synchronisation signal simultaneously to all slaves, but instead to at least two slave groups, wherein these two slave groups comprise at least one shared slave.

10. Method for controlling the power consumption of a connectable load, having a master control device (MSE) and at least two slave dimmers (SD1, SD2),
(VS1) wherein the master control device (MSE) outputs synchronisation signals for synchronising the respective outputs of the slave dimmers (SD1, SD2) via a suitable communication link (KV1, KV2) to the respective slave dimmers (SD1, SD2),
(VS2) wherein each slave dimmer has a slave control device, which receives the synchronisation signals from the master control device (MSE);
(VS3) wherein the slave dimmers (SD1, SD2) are connected in parallel in order to provide a shared controlled output for the connectable load;
(VS4) wherein the master control device (MSE) simultaneously transmits the synchronisation signal to the slave control devices;
**characterised in that**
(VS5) each slave control device is designed to measure the time between the received synchronisation signal and the respectively identified mains voltage zero crossing and to notify the master control device (MSE) of this time;
(VS6) and that the master control device (MSE) is designed to determine a respective correction value from the time difference of the respectively notified time differences for the slave control devices and is designed to output the respective correction values via the communication link (KV1, KV2) to the respective slave devices for correcting the activation of the output (A1, A2) by means of the respective slave dimmer (SD1, SD2).

## Revendications

1. Système gradateur (DS) pour commander la puissance délivrée à une charge pouvant être raccordée, comportant un dispositif de commande maître (MSE) et au moins deux gradateurs-esclaves (SD1, SD2) connectés en parallèle pour fournir une sortie commandée commune pour la charge pouvant être raccordée,
dans lequel le dispositif de commande maître (MSE) est conçu de façon à délivrer des signaux de synchronisation pour synchroniser les sorties respectives des gradateurs-esclaves (SD1, SD2), par l'intermédiaire d'une liaison de communication appropriée (KV1, KV2), aux gradateurs-esclaves respectifs (SD1, SD2),
dans lequel chaque gradateur-esclave comprend un dispositif de commande esclave qui est conçu pour recevoir les signaux de synchronisation depuis le dispositif de commande maître (MSE), et
le dispositif de commande maître (MSE) est conçu de manière à envoyer les signaux de synchronisation simultanément aux dispositifs de commande esclaves, **caractérisé en ce que**
chaque dispositif de commande esclave est conçu pour mesurer le temps entre le signal de synchronisation respectif reçu et le passage à zéro de la tension secteur respectivement détecté et pour communiquer ce temps au dispositif de commande maître (MSE), et **en ce que** le dispositif de commande maître (MSE) est conçu de façon à déterminer une valeur de correction respective à partir de la différence temporelle des différences de temps respectivement communiquées pour les dispositifs de commande esclaves et pour délivrer les valeurs de correction respectives aux dispositifs de commande esclaves respectifs, via la liaison de communication (KV1, KV2), afin de corriger l'excitation de la sortie (A1, A2) par le gradateur-esclave respectif (SD1, SD2).

2. Système gradateur (DS) selon la revendication 1, dans lequel, pour déterminer les valeurs de correction respectives, le dispositif de commande maître (MSE) envoie simultanément à tous les gradateurs-esclaves (SD1, SD2) un signal pour mesurer le temps spécifique du passage à zéro des esclaves respectives et ce signal envoyé et le dispositif de commande maître (MSE) fournit, sur la base des temps mesurés spécifiques de l'esclave respectif, la différence temporelle respective à titre de valeur de correction respective spécifique de l'esclave respectif.

3. Système gradateur (DS) selon l'une quelconque des revendications précédentes, dans lequel les temps spécifiques de l'esclave mesurés sont communiqués avec une commande par interruption au dispositif de commande maître (MSE).

4. Système gradateur (DS) selon l'une quelconque des revendications précédentes, dans lequel le dispositif de commande maître (MSE) interroge les temps spécifiques de l'esclave mesurés depuis les gradateurs-esclaves respectifs (SD1, SD2) par une attente active.

5. Système gradateur (DS) selon l'une quelconque des revendications précédentes, dans lequel les signaux de synchronisation respectifs sont envoyés par le dispositif de commande maître (MSE) aux gradateurs-esclaves (SD1, SD2) via un conducteur respectivement séparé.

6. Système gradateur (DS) selon l'une quelconque des revendications précédentes, dans lequel plusieurs mesures pour déterminer les valeurs de correction respectives sont exécutées et la moyenne des valeurs de mesure respectives est établie pour déterminer la valeur de correction respective.

7. Système gradateur (DS) selon l'une quelconque des revendications précédentes, dans lequel les dispositifs de commande esclaves envoient la signalisation au dispositif de commande maître (MSE) respectivement avec un décalage temporel l'un par rapport à l'autre.

8. Système gradateur (DS) selon l'une quelconque des revendications précédentes, dans lequel le système gradateur (DS) comprend en outre un module de communication (KM), qui est conçu pour recevoir des signaux d'un bus d'installation (B) et pour les transmettre au dispositif de commande maître (MSE).

9. Système gradateur (DS) selon l'une quelconque des revendications précédentes, dans lequel le maître n'envoie pas simultanément le signal de synchronisation à tous les esclaves, mais à au moins deux groupes d'esclave, ces deux groupes d'esclaves comprenant au moins un esclave commun.

10. Procédé de commande de la puissance délivrée à une charge pouvant être raccordée, comprenant un dispositif de commande maître (MSE) et au moins deux gradateurs-esclaves (SD1, SD2), selon lequel
(VS1) le dispositif de commande maître (MSE) délivre des signaux de synchronisation pour synchroniser les sorties respectives des gradateurs-esclaves (SD1, SD2) par l'intermédiaire d'une liaison de communication appropriée (KV1, KV2) aux gradateurs-esclaves respectifs (SD1, SD2), (VS2) chaque gradateur-esclave comprend un dispositif de commande esclave qui reçoit les signaux de synchronisation depuis le dispositif de commande maître (MSE), (VS3) les gradateurs-esclaves (SD1, SD2) sont connectés en parallèle pour fournir une sortie commandée commune pour la charge pouvant être raccordée, et
(VS4)le dispositif de commande maître (MSE) envoie le signal de synchronisation simultanément aux dispositifs de commande esclaves,
**caractérisé en ce que**
(VS5) chaque dispositif de commande esclave est conçu pour mesurer le temps entre le signal de synchronisation reçu et le passage à zéro de la tension secteur respectivement détecté et pour communiquer ce temps au dispositif de commande maître (MSE), et **en ce que**
le dispositif de commande maître (MSE) est conçu de façon à déterminer une valeur de correction respective à partir de la différence temporelle des différences de temps respectivement communiquées pour les dispositifs de commande esclaves et pour délivrer les valeurs de correction respectives aux dispositifs de commande esclaves respectifs, via la liaison de communication (KV1, KV2), afin de corriger l'excitation de la sortie (A1, A2) par le gradateur-esclave respectif (SD1, SD2).
